# EUROPÄISCHE PATENTSCHRIFT

(11) **EP 0 645 418 B1**
(45) Veröffentlichungstag und Bekanntmachung des Hinweises auf die Patenterteilung: **22.04.1998**
(21) Anmeldenummer: 94113748.1
(22) Anmeldetag: 02.09.1994
(51) Int. Cl.: C08J 9/00, C08K 13/02

(54) **Fluorchlorkohlenwasserstofffreier, flammwidriger Polyurethanhartschaum**
Fire-retarding rigid polyurethane foam devoid of fluorochlorohydrocarbons
Mousse de polyuréthane rigide ignifuge dépourvue de fluorochlorohydrocarbures

(30) Priorität: 25.09.1993 DE 4332771
(43) Veröffentlichungstag der Anmeldung: 29.03.1995
(73) Patentinhaber: Clariant GmbH, 65929 Frankfurt am Main (DE)
(72) Erfinder: Staendeke, Horst, Dr., D-53797 Lohmar (DE)

(56) Entgegenhaltungen:
- EP-A- 0 450 076
- DE-A- 1 694 430
- DE-A- 1 956 406
- W.C. Kuryla et al., "Flame Retardancy of Polymeric Materials, vol. 1, Marcel Dekker, New York 1973, S. 45-6
- Römpp Chemie Lexikon, 9.Aufl., GTV-Stuttgart, 1989, S. 700,701,705,2236,2237

## Beschreibung

Die Erfindung betrifft einen fluorchlorkohlenwasserstoff (FCKW)-freien, flammwidrigen Polyurethanhartschaum.

Verbote und Verwendungsbeschränkungen für vollhalogenierte FCKW, beispielsweise für Trichlorfluormethan (FCKW 11), als Treibmittel bei der Herstellung von Polyurethan(PUR)-Hartschaum machten es erforderlich, auch brennbare organische Verbindungen als FCKW-Ersatzstoffe einzusetzen. So ist die Verwendung von 2-Chlorpropan als Treibmittel für PUR-Hartschäume in der US-A-5,132,332 beschrieben. Informationen über die Verwendung von Pentan als Treibmittel für PUR-Hartschäume finden sich bei G. Heilig, Pentan - eine FCKW-Alternative für Polyurethan-Hartschaumstoffe, Kunststoffe 81 (1991) 7, Seiten 622-625, und M. Mann et al., Polyurethan-Verarbeitung - Hartschaumstoffe mit alternativen Blähmitteln, Plastverarbeiter 43 (1992) 9, Seiten 90-96.

Die Verwendung brennbarer Treibmittel bei der Herstellung von PUR-Hartschäumen führte erwartungsgemäß zu Problemen bei der flammwidrigen Ausrüstung, weshalb die Flammschutzsysteme den veränderten Bedingungen angepaßt werden mußten.

Für FCKW-getriebene PUR-Hartschäume ist die Verwendung von Tris(chlorisopropyl)phosphat als Flammschutzmittel aus der DE-AS 16 94 43o bekannt, während die DE-AS 19 56 4o6 (= GB-PS 1 283 426) über die Verwendung von Ammoniumpolyphosphat (APP) und vor allem von Kombinationen von APP und Tris(halogenalkyl)phosphat als Flammschutzmittel berichtet.

Anlagen für die Herstellung von PUR-Blockschaum bzw. -Laminatschaum (sogen. Doppelbandanlagen) sind üblicherweise nicht für den Einsatz fester Flammschutzmittel ausgelegt.

Dieses Problem konnte erfindungsgemäß durch die Entwicklung einer pumpfähigen, sedimentationsstabilen APP/Tris(chlorisopropyl)phosphat-Suspension gelöst werden. Dabei erwies sich eine Suspension mit einem APP-Anteil von etwa 4o Gew% als besonders günstig. Überraschenderweise wurde gefunden, daß diese Suspension ein sehr wirksames Flammschutzmittel für PUR-Hartschäume darstellt, wenn sie bei deren Herstellung dem Reaktionsansatz zugesetzt wird und als Treibmittel für die PUR-Hartschäume infolge des Verbots von FCKW, besonders von Trichlormonofluormethan (R11), an sich brennbare Ersatzstoffe wie 2-Chlorpropan oder Pentan (n-, iso- oder cyclo-Pentan) Anwendung finden. Dies war um so überraschender, weil halogenierte Polyole wie ®Ixol B 251 oder ®PHT4-Diol, welche gleichzeitig als Einsatzstoff Polyol und Flammschutzmittel fungieren, zwar beim Einsatz für R 11-getriebene PUR-Hartschäume recht wirksam sind, aber bei Verwendung brennbarer FCKW-Ersatzstoffe als Treibmittel die geforderten Flammschutznormen nur bei Einsatz unwirtschaftlich hoher Mengen erfüllen. Dies traf im Prinzip auch für APP und Tris(chlorisopropyl)phosphat zu, wenn sie jeweils allein als Flammschutzmittel eingesetzt wurden. Erst durch die Kombination beider Flammschutzmittel erreichte man eine beträchtliche Wirkungsverstärkung (Synergismus).

Im einzelnen ist der FCKW-freie, flammwidrige PUR-Hartschaum der Erfindung dadurch gekennzeichnet, daß er als Flammschutzsystem eine Kombination von etwa 4o Gew.-% Ammoniumpolyphosphat und etwa 6o Gew.-% Tris(chlorisopropyl)phosphat enthält.

Der PUR-Hartschaum der Erfindung kann darüber hinaus bevorzugt und wahlweise dadurch gekennzeichnet sein, daß
a) bei seiner Herstellung das Flammschutzsystem in Form einer Paste zugesetzt wurde, die mit hochdisperser Kieselsäure, modifizierten Rizinusölderivaten, organisch modifizierten Schichtsilikaten oder deren Mischungen thixotrop eingestellt war;
b) er bei Einsatz von 2-Chlorpropan als fluorchlorkohlenwasserstofffreies Treibmittel bei seiner Herstellung 10 bis 50 Gew.-Teile, vorzugsweise 20 bis 30 Gew.-Teile, des Flammschutzsystems, je 100 Gew.-Teile eingesetztes Polyol, enthält;
c) er bei Einsatz von Pentan als fluorchlorkohlenwasserstofffreies Treibmittel bei seiner Herstellung 30 bis 70 Gew.-Teile, vorzugsweise 40 bis 60 Gew.-Teile, des Flammschutzsystems, je 100 Gew. eingesetztes Polyol, enthält.

### Beispiele

Den Versuchen zur Herstellung von FCKW-freien, flammwidrigen Polyurethan-Hartschäumen lag folgende Rezeptur zugrunde (Gew.-Teile):

| | |
|---|---|
| 100 | Teile Polyol ®Caradol 585-8, ein Polyetherpolyol der Deutsche Shell Chemie GmbH, Eschborn, mit einer Viskosität von 5,1 Pa·s und einer Dichte von 1,10 g/ml |
| variable | Teile Flammschutzmittel |
| 2,5 | Teile Katalysator (Dimethylcyclohexylamin) |
| 2,0 | Teile Siliconstabilisator ®DC 193, ein Siliconglykol-Copolymer der Dow Corning GmbH, Wiesbaden, mit einer Dichte von 1,07 g/ml |
| 3,0 | Teile Wasser |
| variable | Teile Treibmittel |
| variable | Teile Polyisocyanat (NCO-Index 110) ®Caradate 30, ein Diphenylmethan-4,4'-diisocyanat (Isomerengemisch) der Deutsche Shell Chemie GmbH, Eschborn, mit einer Viskosität von ca. 200 mPa·s und einer Dichte von 1,23 g/ml. |

Bei den nachfolgenden Beispielen wurden folgende Flammschutzmittel eingesetzt:
- ®Hostaflam AP 422, ein langkettiges, wenig wasserlösliches Ammoniumpolyphosphat der Hoechst AG, Frankfurt, mit einer Dichte von 1,9 g/ml, einem Phosphorgehalt von 31,5 Gew% und einem Stickstoffgehalt von 14,5 Gew%.
- ®Hostaflam OP 82o, ein Tris(chlorisopropyl)phosphat der Hoechst AG, Frankfurt, mit einer Dichte von 1,30 g/ml, einem Phosphorgehalt von 9,5 Gew% und einem Chlorgehalt von 32,5 Gew%.
- ®Ixol B 251, ein halogeniertes Polyetherpolyol der Solvay & Cie., Brüssel, mit einer Dichte von 1,57 g/ml, einem Chlorgehalt von 6,8 Gew%, einem Bromgehalt von 32 Gew% und einer Hydroxylzahl von 330 mg KOH/g.
- ®PHT4-Diol, ein Tetrabromphthalsäurediol der Great Lakes Chemical Corp., West Lafayette (USA), mit einer Dichte von 1,8 g/ml, einem Bromgehalt von 46 Gew% und einer Hydroxylzahl von 200 - 235 mg KOH/g.

Als Treibmittel kamen zum Einsatz:
- n-Pentan mit einem Siedepunkt von 36 °C und einer Dichte von o,63 g/ml.
- 2-Chlorpropan mit einem Siedepunkt von 36 °C und einer Dichte von 0,87 g/ml.

Zur Beurteilung der Flammwidrigkeit wurden Brandtests nach DIN 4102, Teil 1, mit jeweils 5 Proben in den Abmessungen 90 x 190 mm (Kantenbeflammung) durchgeführt.

Für Polyurethan-Hartschäume, die in Deutschland als Baustoffe (Dämmstoffe) eingesetzt werden sollen, ist die Einstufung in die Klasse DIN 4102-B2 verbindlich vorgeschrieben.

In Tabelle 1 sind die Versuche (Beispiele 1-21) aufgelistet, bei denen 2-Chlorpropan als Treibmittel verwandt wurde.

Die Versuche mit Ammoniumpolyphosphat (Beispiele 1-3) zeigen, daß bei einer Einsatzmenge von 25 Teilen/loo Teile Polyol keine Einstufung in die Klasse DIN 4102-B2 erreicht werden konnte; entsprechendes gilt für Tris(chlorisopropyl) phosphat (Beispiele 4-6) bei Einsatzmengen bis zu 40 Teilen/ 100 Teile Polyol.

Ein deutlicher Synergismus wurde erkennbar, wenn eine Kombination beider Flammschutzmittel zum Einsatz kam. Selbst schon bei einer Gesamt-Flammschutzmittelkonzentration von 20 Teilen/100 Teile Polyol (8 Teile Ammoniumpolyphosphat + 12 Teile Tris(chlorisopropyl)phosphat) wurde eine Einstufung in die Klasse DIN 4102-B2 erreicht.

Dies war überraschend und aus den Ergebnissen der Versuche mit den Einzelkomponenten nicht vorhersehbar.

Dieser Befund fand seine Bestätigung in den Versuchen, die in analoger Weise mit den üblicherweise eingesetzten halogenierten Polyolen (®Ixol B 251 bzw. ®PHT4-Diol) durchgeführt wurden. Weder beim ®Ixol B 251 (Beispiele 10-15) noch beim ®PHT4-Diol (Beispiele 16-21) waren bei den Kombinationen mit dem Tris(chlorisopropyl)phosphat Anzeichen einer Wirkungsverstärkung erkennbar.

In Tabelle 2 sind die Versuche (Beispiele 22-42) aufgelistet, bei denen n-Pentan als Treibmittel verwandt wurde.

Die Versuche mit Ammoniumpolyphosphat (Beispiele 22-24) zeigen, daß mit Einsatzmengen von 40 Teilen/100 Teilen Polyol keine Einstufung in die Klasse DIN 4102-B2 erreicht werden konnte; entsprechendes gilt für Tris(chlorisopropyl)phosphat (Beispiele 25-27) bei Einsatzmengen bis zu 50 Teilen/100 Teile Polyol.

Ähnlich wie bei den Versuchen mit 2-Chlorpropan ist auch beim Treibmittel n-Pentan ein deutlicher Synergismus bei der Kombination der beiden Flammschutzmittel erkennbar, allerdings sind die zur Einstufung in die Klasse DIN 4102-B2 erforderlichen Flammschutzmittelkonzentrationen erheblich höher.

Ebenfalls ähnlich wie bei den Versuchen mit 2-Chlorpropan ist auch beim Treibmittel n-Pentan für die Kombinationen der halogenierten Polyole (®Ixol B 251 bzw. ®PHT4-Diol) mit dem Tris(chlorisopropyl)phosphat keinerlei Wirkungsverstärkung zu beobachten.

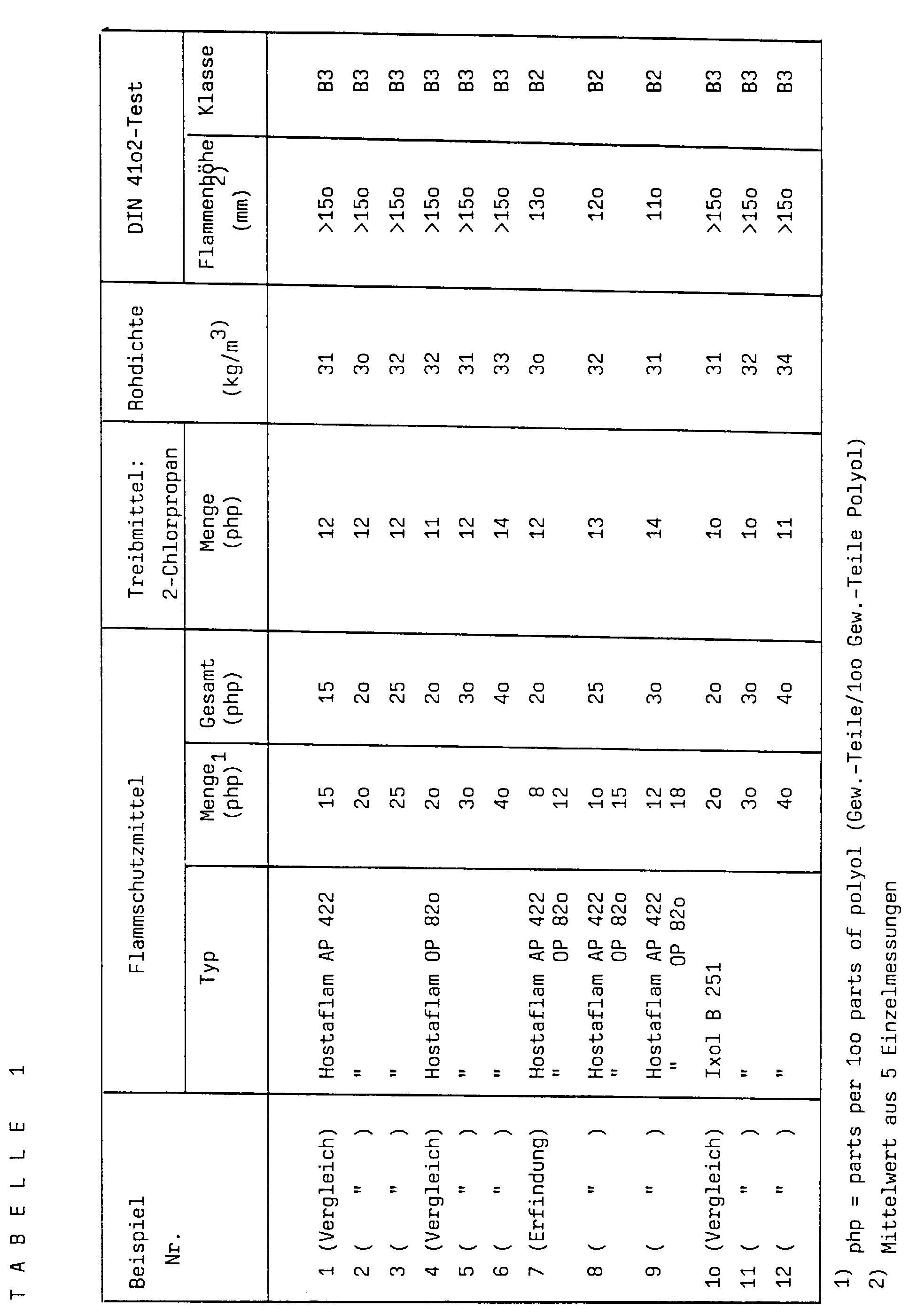

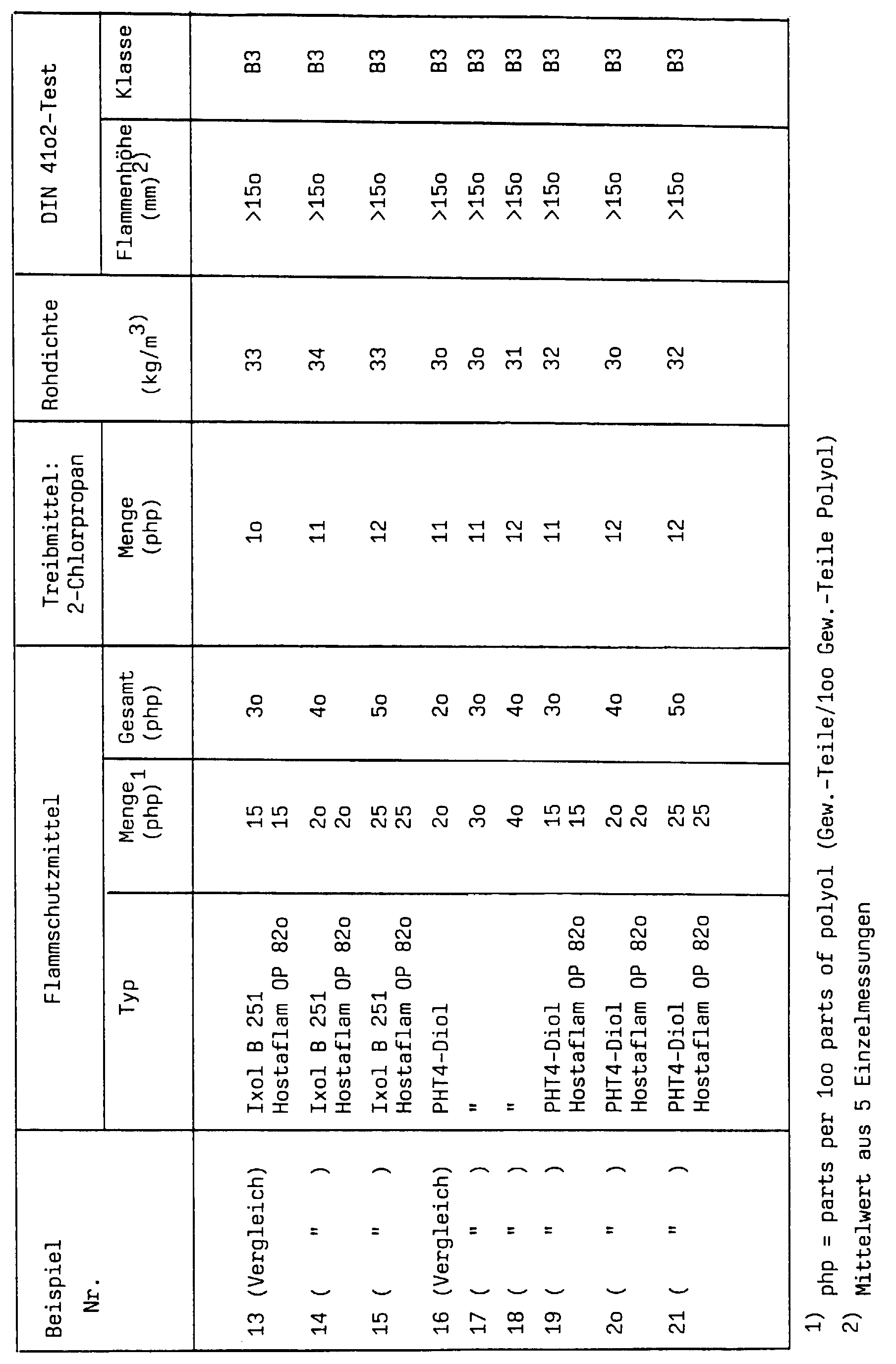

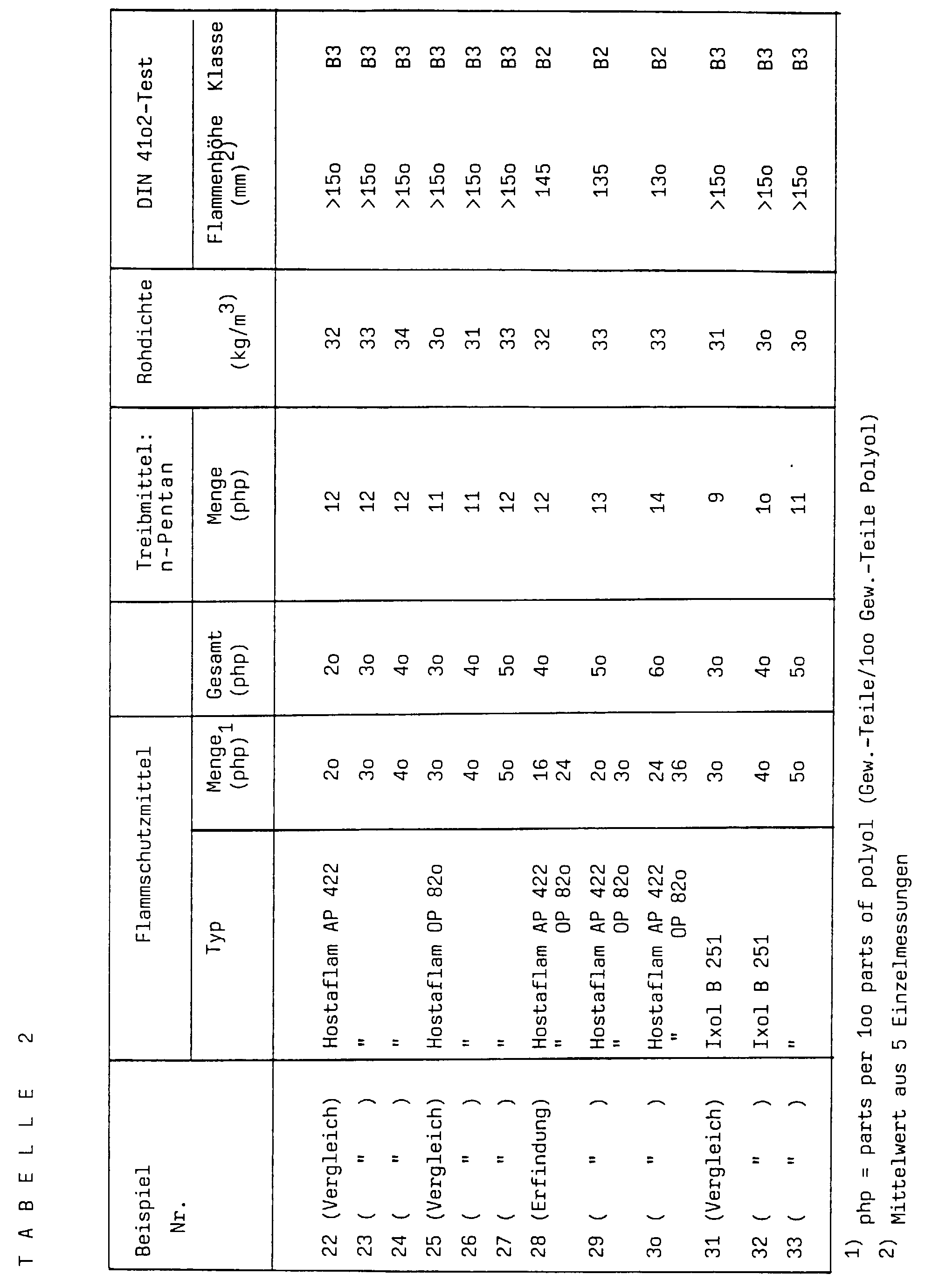

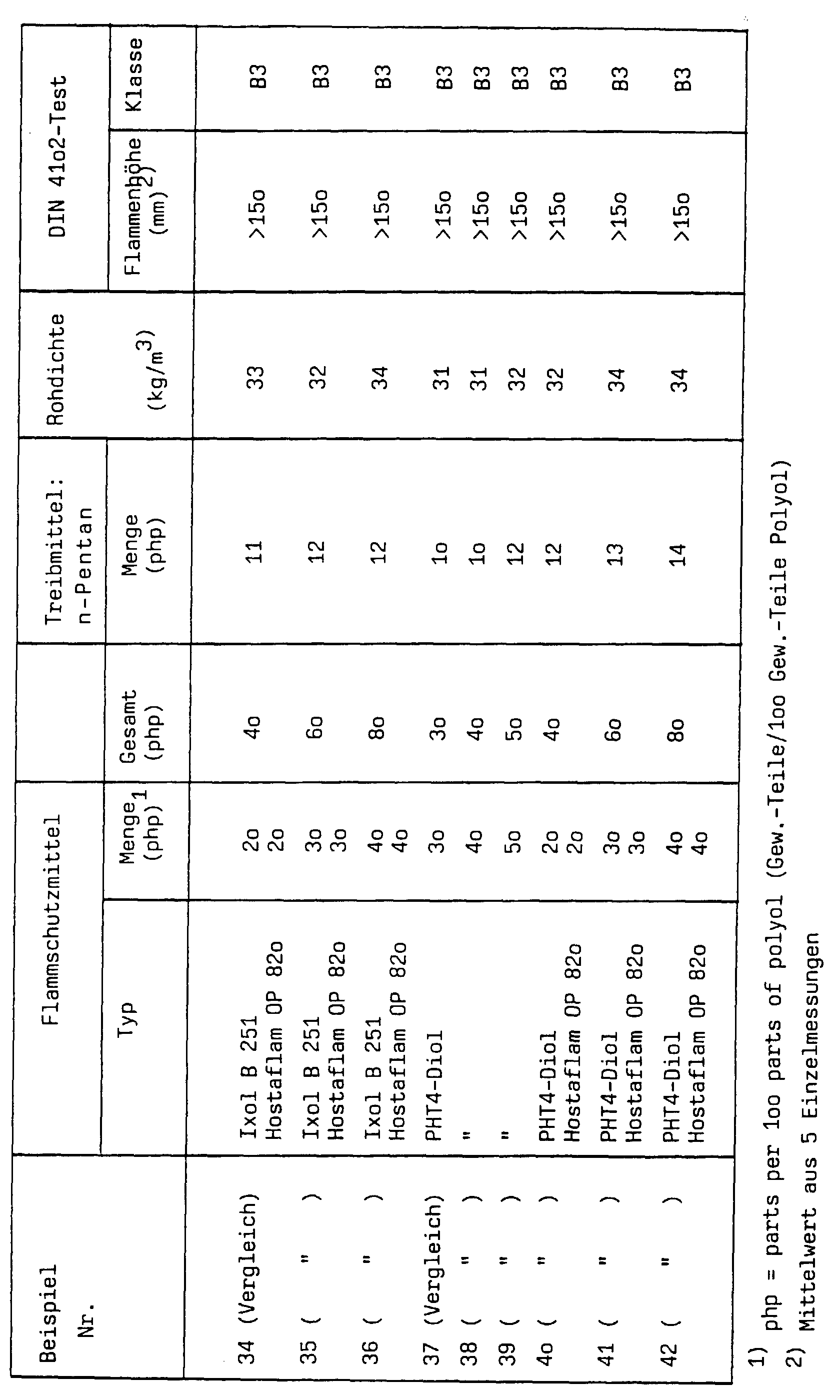

## Patentansprüche

1. Fluorchlorkohlenwasserstofffreier, flammwidriger Polyurethanhartschaum, dadurch gekennzeichnet, daß er als Flammschutzsystem eine Kombination von etwa 40 Gew.-% Ammoniumpolyphosphat und etwa 60 Gew.-% Tris(chlorisopropyl)phosphat enthält.

2. Verfahren zur Herstellung eines Polyurethanhartschaums nach Anspruch 1, dadurch gekennzeichnet, daß bei seiner Herstellung das Flammschutzsystem in Form einer Paste zugesetzt wurde, die mit hochdisperser Kieselsäure, modifizierten Rizinusölderivaten, organisch modifizierten Schichtsilikaten oder deren Mischungen thixotrop eingestellt war.

3. Verfahren zur Herstellung eines Polyurethanhartschaums nach Anspruch 2, dadurch gekennzeichnet, daß er bei Einsatz von 2- Chlorpropan als fluorchlorkohlenwasserstofffreies Treibmittel bei seiner Herstellung 10 bis 50 Gew.-Teile, das Flammschutzsystems je 100 Gew.-Teile eingesetztes Polyol enthält.

4. Verfahren zur Herstellung eines Polyurethanhartschaums nach Anspruch 2, dadurch gekennzeichnet, daß er bei Einsatz von Pentan als fluorchlorkohlenwasserstofffreies Treibmittel bei seiner Herstellung 30 bis 70 Gew.-Teile des Flammschutzsystems je 100 Gew.-Teile eingesetztes Polyol enthält.

5. Verfahren zur Herstellung eines Polyurethanhartschaums nach Anspruch 3, dadurch gekennzeichnet, daß er 20 bis 30 Gew.-Teile des Flammschutzsystems je 100 Gew.-Teile eingesetztes Polyol enthält.

6. Verfahren zur Herstellung eines Polyurethanhartschaums nach Anspruch 4, dadurch gekennzeichnet, daß er 40 bis 60 Gew.-Teile des Flammschutzsystems je 100 Gew.-Teile eingesetztes Polyol enthält.

## Claims

1. A flame-retardant rigid polyurethane foam containing no fluorochlorohydrocarbons and containing, as flame-retardant system, a combination of about 40 % by weight of ammonium polyphosphate and about 60 % by weight of tris(chloroisopropyl) phosphate.

2. A process for producing a rigid polyurethane foam as claimed in claim 1, which comprises, during the production of the foam, adding the flame-retardant system in the form of a paste which has been rendered thixotropic with finely divided silicic acid, modified castor oil derivatives, organically modified phyllosilicates or mixtures of these.

3. The process for producing a rigid polyurethane foam as claimed in claim 2, wherein 2-chloropropane is used during production of the foam as blowing agent containing no fluorochlorohydrocarbons and the foam contains from 10 to 50 parts by weight of the flame-retardant system per 100 parts by weight of polyol used.

4. The process for producing a rigid polyurethane foam as claimed in claim 2, wherein pentane is used in production of the foam as blowing agent containing no fluorochlorohydrocarbons and the foam contains from 30 to 70 parts by weight of the flame-retardant system per 100 parts by weight of polyol used.

5. The process for producing a rigid polyurethane foam as claimed in claim 3, wherein the foam contains from 20 to 30 parts by weight of the flame-retardant system per 100 parts by weight of polyol used.

6. The process for producing a rigid polyurethane foam as claimed in claim 4, wherein the foam contains from 40 to 60 parts by weight of the flame-retardant system per 100 parts by weight of polyol used.

## Revendications

1. Mousse de polyuréthane rigide ignifuge dépourvue de fluorochlorohydrocarbures caractérisée en ce qu'elle contient comme système antiflamme une combinaison d'environ 40 % en masse de polyphosphate d'ammonium est d'environ 60 % en masse de phosphate de tris(chloroisopropyle).

2. Procédé de production d'une mousse de polyuréthane rigide selon la revendication 1, caractérisé en ce que, lors de sa production, le système antiflamme a été ajouté sous forme d'une pâte dont la thixotropie a été ajustée avec de l'acide silicique hautement dispersé, des dérivés de l'huile de ricin modifiés, des silicates feuilletés modifiés par voie organique ou leurs mélanges.

3. Procédé de production d'une mousse de polyuréthane rigide selon la revendication 2, caractérisé en ce que, dans le cas de l'utilisation du 2-chloropropane comme agent moussant dépourvu de fluorochlorohydrocarbures lors de sa production, elle contient 10 à 50 parties en masse de système antiflamme pour 100 parties en masse de polyol utilisé.

4. Procédé de production d'une mousse de polyuréthane rigide selon la revendication 2, caractérisé en ce que, dans le cas de l'utilisation du pentane comme agent moussant dépourvu de fluorochlorohydrocarbures lors de sa production, elle contient 30 à 70 parties en masse de système antiflamme pour 100 parties en masse de polyol utilisé.

5. Procédé de production d'une mousse de polyuréthane rigide selon la revendication 3, caractérisé en ce qu'elle contient 20 à 30 parties en masse de système antiflamme pour 100 parties en masse de polyol utilisé.

6. Procédé de production d'une mousse de polyuréthane rigide selon la revendication 4, caractérisé en ce qu'elle contient 40 à 60 parties en masse de système antiflamme pour 100 parties en masse de polyol utilisé.
